# EUROPEAN PATENT SPECIFICATION

(11) **EP 2 371 673 B1**
(45) Date of publication and mention of the grant of the patent: **20.03.2013**
(21) Application number: 10197137.2
(22) Date of filing: 28.12.2010
(51) Int. Cl.: H02K 5/22, H02K 11/00, B62D 5/04

(54) **Electric driving apparatus**
Elektrische Ansteuervorrichtung
Appareil de commande électrique

(30) Priority: 31.03.2010 JP 2010081391
(43) Date of publication of application: 05.10.2011
(73) Proprietor: Mitsubishi Electric Corporation, Chiyoda-ku Tokyo 100-8310 (JP)
(72) Inventor: Tominaga, Tsutom, Tokyo 100-8310 (JP)
(74) Representative: HOFFMANN EITLE

(56) References cited:
- EP-A1- 1 955 927
- DE-A1-102004 054 007
- JP-A- 2008 211 945
- US-A1- 2003 116 376

## Description

The present invention relates to an electric driving apparatus used, for example, for an electric power steering machine that assists driving of the steering system of a vehicle with a rotary force of the electric motor.

### BACKGROUND ART

There is a driving apparatus for an electric power steering machine having an electric motor that outputs an assistive torque to the steering wheel of a vehicle and a control device that drives the electric motor under control, and the control device is installed to the electric motor (see, for example, Patent Document 1) .
In this driving apparatus, the control device is disposed on the axis line of the rotation shaft of the electric motor and fixed to the electric motor.
A motor terminal, which is an output terminal extending from the control device toward the electric motor, is bent outward in the radial direction of the electric motor at the end and fixed to a winding terminal of the electric motor with screws at the outside of a U-shaped connecting member.
The motor terminal and the winding terminal are overlaid one on the other in the axial direction of the rotation shaft of the electric motor and fixed from the anti-output side of the electric motor with screws and thereby electrically connected to each other.
Also, after the winding terminal of the electric motor and the motor terminal of the control device are fixed to each other with screws, a cover is fixedly bonded to a circuit case of the control device with an adhesive.

Patent Document 1: JP-A-2007-62433

The driving apparatus described in Patent Document 1 requires screws to electrically connect the motor terminal and the winding terminal.
In addition, not only a space in which to overlay the motor terminal and the winding terminal on the outside of the connecting member but also a space for screw tightening is required.
Consequently, there arise problems that the cost increases with an increasing number of components and that the apparatus is upsized.
Also, because the motor terminal and the winding terminal are fixed with screws and electrically connected to each other, there is a problem that the reliability of electrical connection is lowered as the screws are loosened by vibrations and thermal cycles under use environment of an automobile.

Further, because the cover is fixedly bonded to the circuit case after the winding terminal and the motor terminal are connected to each other, there remains a process of installing the cover on the part of the control device after the process of installing the control device to the electric motor. This poses a problem that assembling workability is lowered.

EP 1 955 927 A1 relates to an electric driving means. It comprises: an electric motor, a control device that is disposed on an axis line of the rotation shaft of the electric motor, three second contact elements that extend parallel to an axis direction of the rotation shaft from the electric motor toward the control device, and three first contact elements that are provided on an extension line of the three second contact elements and which are connected to the second contact elements, wherein the three first and second contact elements are press-fit onto one another in a process of combining the control device and the electric motor so as to connect them by bringing them into a pressure contact state, the first contact elements being provided with a slit having protrusions for contacting the second contact elements press-fit thereto. US 2003/0116376 A1 is further prior art.

### SUMMARY OF THE INVENTION

The invention is to solve the problems discussed above and has an object to provide a downsized, cost-reduced electric driving apparatus achieving enhanced assembling workability and reliability of electrical connection by forming an end of the motor terminal and an end of the output terminal to extend in the same direction and parallel to the axial direction of the electric motor and by joining the motor terminal and the output terminal by pressure contact at the same time when installing the control device to the electric motor.

An electric driving apparatus according to one aspect of the invention has the features of claim 1.

According to the electric driving apparatus configured as above, the end of the motor terminal and the end of the output terminal are formed to extend in the same direction and parallel to the axial direction of the electric motor and the motor terminal and the output terminal are joined by pressure contact at the same time when the control device is installed to the electric motor. Hence, a size of the apparatus can be reduced and so can the cost while the assembling workability and the reliability of electric connection are enhanced.
The foregoing and other object, features, aspects, and advantages of the present invention will become more apparent from the following detailed description of the present invention when taken conjunction with the accompanying drawings.

### BRIEF DESCRIPTION OF THE DRAWINGS

Fig. 1 is a cross section of an electric power steering machine to which an electric driving apparatus according to a first embodiment of the invention is attached;
Fig. 2 is a cross section of the electric driving apparatus according to the first embodiment of the invention;
Fig. 3 is a cross section showing an assembling method of the electric driving apparatus according to the first embodiment of the invention;
Fig. 4A is a plan view, Fig. 4B is a partially sectioned side view, and Fig. 4C is a front view of a motor terminal and an output terminal, which are the major portion of the electric driving apparatus according to the first embodiment of the invention;
Fig. 5 is a cross section of an electric power steering machine to which an electric driving apparatus according to a second embodiment of the invention is attached;
Fig. 6 is a cross section of the electric driving apparatus according to the second embodiment of the invention;
Fig. 7 is a cross section of respective portions before the assembling of the electric driving apparatus according to the second embodiment of the invention; and
Fig. 8 is a cross section showing an assembling method of the electric driving apparatus according to the second embodiment of the invention.

### DESCRIPTION OF THE PREFERRED EMBODIMENTS

Hereinafter, respective embodiments of the invention will be described on the basis of the drawings.
In the respective drawings, same reference numerals denote the same or equivalent portions.

### First Embodiment

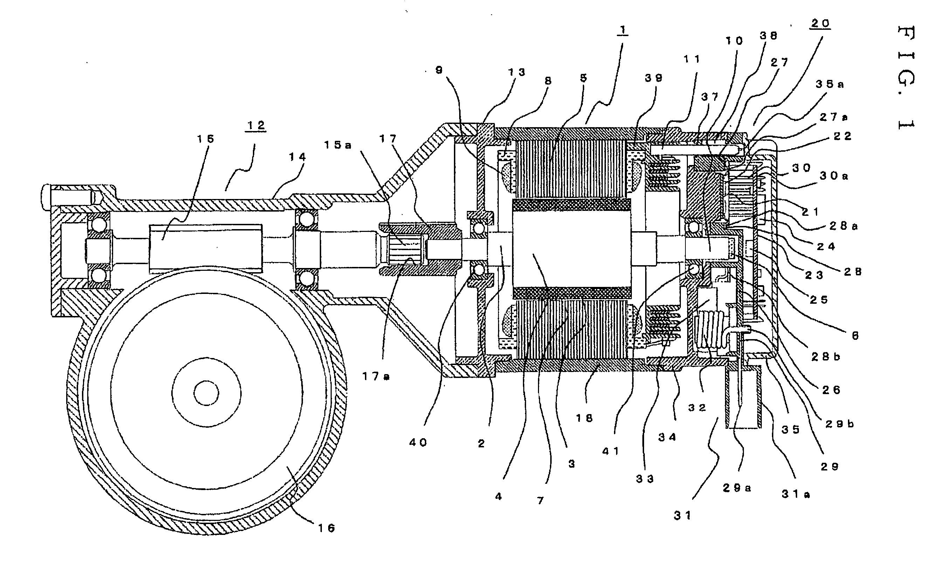

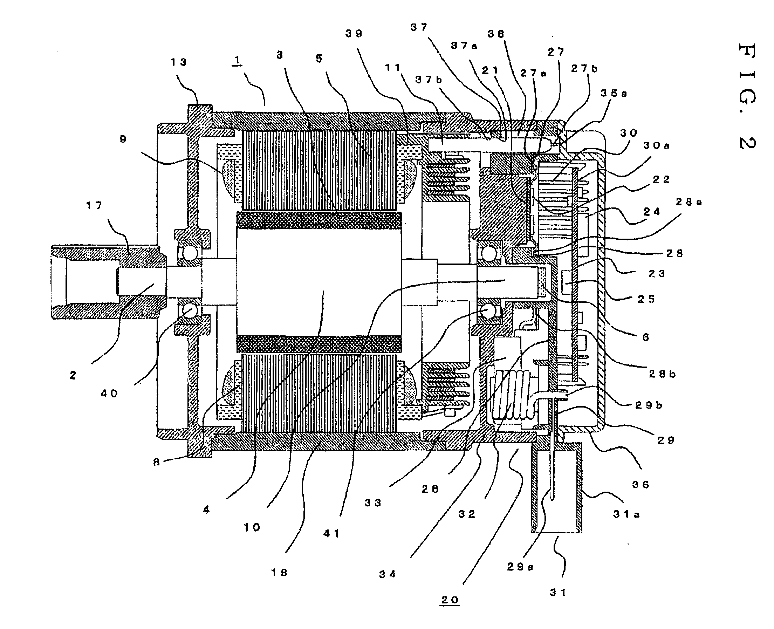

Fig. 1 is a cross section of an electric power steering machine to which an electric driving apparatus according to a first embodiment of the invention is attached. Fig. 2 is a cross section of the electric driving apparatus according to the first embodiment of the invention.
Referring to the drawings, an electric motor 1, which is a 3-phase brushless motor of the electric driving apparatus, includes an output shaft 2 and to this output shaft 2 are attached a rotor 4 to which a permanent magnet 3 having eight magnetic poles is fixed, a stator 5 provided on the periphery of the rotor 4, and a permanent magnet 6 for sensor provided to a shaft end 10 of the output shaft 2 on the anti-output side and magnetized to two poles correspondingly to the positions of the magnetic poles of the permanent magnet 3 of the rotor 4.

The stator 5 includes 12 salient poles 7 opposing the outer periphery of the permanent magnet 3, an insulator 8 attached to the salient poles 7, and armature windings 9 wound around by the insulator 8 and connected to three U, V, and W phases. The armature windings 9 are connected by star connection and three ends thereof are respectively connected to three motor terminals 11 disposed on the shaft end 10 side of the output shaft 2.
Each motor terminal 11 is made of copper or copper alloy, for example, in a strip shape and the surface thereof is tin-plated. The motor terminal 11 is formed in such a manner that the tip end thereof extends toward a control device 20 and also extends parallel to the axial direction of the electric motor 1. The end (the base) on the opposite side is fixed to a holder 39.
The stator 5 is fixed to a motor case 18 made of aluminum. The motor case 18 to which is fixed the stator 5 is fixed to a bracket 13 with screws (not shown).

The electric motor 1 is fixed to a reduction gear 12, which is a deceleration mechanism. The reduction gear 12 includes a gear case 14 to which the bracket 13 of the electric motor 1 is installed, a worm gear 15 provided inside the gear case 14 to reduce rotations of the output shaft 2, and a worm wheel 16 meshed with the worm gear 15. A spline 15a is formed at the end of the worm gear 15. A coupling 17 having a spline 17a formed on the inner side thereof is press-fit to the end of the output shaft 2. The ends (splines 17a and 15a) of the coupling 17 and the worm gear 15 are splined to each other so that a torque is transmitted from the electric motor 1 to the reduction gear 12.

The control device 20 that controls the driving of the electric motor 1 includes a power substrate 21 formed of a highly heat-conductive ceramic board, a control substrate 23 formed of an insulated printed-circuit board, a coil 32 to eliminate electromagnetic noises, a high-capacity capacitor 33 (about 2200 µF × 3) to absorb ripple components of a motor current flowing into the electric motor 1, a circuit case 26 having a plurality of conductive plates 27, 28, and 29, 30 that are insert-molded in insulating resin, a heat sink 34 made of aluminum having a high heat conductivity, and a cover 35 made of insulating resin and installed so as to cover the control substrate 23.

The power substrate 21 is formed, for example, of a DBC (registered trademark of Toshiba Materials Co., Ltd.) board and a copper plate is formed as a wiring pattern on the ceramic board made of alumina. In addition, on the wiring pattern on the power substrate 21, high-current components, such as a semiconductor switching element (for example, FET) 22 forming a 3-phase bridge circuit to switch a motor current of the electric motor 1 depending on the magnitude and direction of an assistive torque and a shunt resistor (not shown) to detect a current of the electric motor 1, are mounted by soldering.

The control substrate 23 is formed of a multi-layer (for example, 4-layer) glass epoxy board. On the control substrate 23, a micro computer 24, a magnetic sensor 25 that detects the magnetic field direction of the permanent magnet 6 for sensor, and peripheral circuit elements (low-current components) including a drive circuit (not shown) and a motor current detection circuit (not shown) are mounted by soldering.
The micro computer 24 computes an assistive torque on the basis of a current detection circuit (not shown) to detect a motor current flowing into the electric motor 1 via one end of the shunt resistor (not shown) and a steering torque signal from a torque sensor (not shown) and also computes a current corresponding to the assistive torque by feeding back the motor current and the rotation position of the rotor 4 detected by the magnetic sensor 25. The micro computer 24 is configured to output a drive signal that controls the semiconductor switching element 22 of the bridge circuit.
Although it is not shown in the drawings, the micro computer 24 is furnished with a known self-diagnosis function in addition to an A-to-D converter and a PWM timer circuit, so that it always performs a self-diagnosis on whether the system is operating normally to interrupt a motor current upon occurrence of an abnormality.

The magnetic sensor 25 mounted on the control substrate 23 is formed of a magneto-resistive element and opposes the permanent magnet 6 for sensor provided at the shaft end 10 of the rotor 4 in the electric motor 1.
The magnetic field direction of the permanent magnet 6 for sensor rotates in association with rotations of the rotor 4 in the electric motor 1.
Because the magnetic resistance varies with this rotation of the magnetic field, the magnetic sensor 25 consequently becomes able to detect the position of the rotor 4. The magnetic sensor 25 adopts a method by which to detect the magnetic field direction. The installation position accuracy with respect to the axial direction of the rotation shaft of the permanent magnet 6 for sensor is therefore less precise than that of a magnetic sensor of a hall element type.

In the circuit case 26, a plurality of conductive plates 27, 28, 29, and 30, which are insert-molded in insulating resin, form the wiring pattern.
The conductive plates 27, 28, 29, and 30 are formed by pressing a preliminarily plated copper or copper alloy plate. Regarding the conductive plate 27, a pad 27a thereof for wire bonding is plated with nickel and the rest is plated with tin. To be more concrete, the conductive plate 27 is formed by pressing a plate stripe-plated with nickel and tin. On one side of the circuit case 26, the pad 27a used to connect one end of the conductive plate 27 to the power substrate 21 by wire bonding is formed to be exposed from the insulating resin and an output terminal 27b is formed at the other end of the conductive plate 27. The output terminal 27b is formed in such a manner that the end thereof (the anti-electric motor side end) extends in a direction opposite to the electric motor 1 and also extends parallel to the axial direction of the electric motor 1.

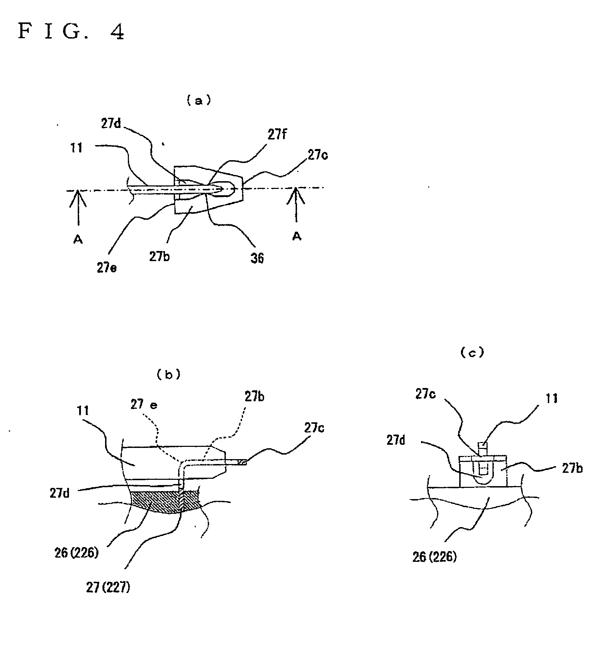

As is shown in Figs. 4A through 4C, the output terminal 27b is formed in such a manner that an anti-electric motor side end 27c becomes flat and a slit 27d is provided therein. The slit 27d is formed as a substantially guitar-shaped closed elongate hole with the both ends shaped like a circle.
The output terminal 27b is bent in an L-shape at a bending portion 27e, which is a region including the slit 27d.
Further, the slit 27d is provided with a protrusion 27f in a flat portion extending from the bending portion 27e toward the anti-electric motor side end 27c.
As the motor terminal 11 is press-fit to the protrusion 27f of the slit 27d, a pressure contact portion or a clamping portion (hereinafter, referred to as the pressure contact portion 36) is formed while the protrusion 27f and the motor terminal 11 are in a pressure contact or clamped state. The output terminal 27b and the motor terminal 11 are electrically connected to each other by this pressure contact portion 36. There is tin plating on the surface of the pressure contact portion 36 on the motor terminal 11 side. On the contrary, there is no adhesion of tin plating on the surface on the protrusion 27f side because it is pressed after the plating.
In the pressure contact portion 36, tin plated on the surface of the motor terminal 11 diffuses to copper or copper alloy of the output terminal 27b and also diffuses to copper or copper alloy of the motor terminal 11. A compound layer of copper and tin is therefore formed on the both sides of the tin plating. Also, in the pressure contact portion 36, layers of copper or copper alloy of the motor terminal 11, the copper tin compound of the motor terminal 11, tin plating, the copper tin compound of the output terminal 27b, and copper or copper alloy of the output terminal 27b are formed integrally into one piece. Hence, electric resistance of the connection becomes smaller in the pressure contact portion 36.

In the circuit case 26, a guide portion 37 is formed integrally from insulating resin. The guide portion 37 is provided with a slit 37a penetrating in a direction parallel to the axis line of the electric motor 1. The motor terminal 11 is held in the slit 37a as the motor terminal 11 is inserted therein. A chamfer 37b is provided to the slit 37a on the electric motor 1 side to facilitate insertion of the motor terminal 11. It should be noted that the pressure contact portion 36 is provided to the guide portion 37 on the anti-electric motor 1 side.
When the long motor terminal 11 is press-fit to the protrusion 27f of the slit 27d, the intermediate portion of the motor terminal 11 is held by the guide portion 37. It thus becomes possible to prevent buckling of the motor terminal 11 caused by a press-fitting force.

As has been described, the output terminal 27b is bent in an L-shape. Hence, a portion of the output terminal 27b between the pressure contact portion 36 and the region protruding from the insulating resin of the circuit case 26 is an elastic body. Stress in a joined portion caused by a difference of linear expansion coefficients among the respective components is therefore mitigated under temperature environment in which the apparatus is used.

On the opposite side of the pad 27a with the power substrate 21 in between, a pad 28a is provided to be exposed from the insulating resin as one end of the conductive plate 28 to serve as a power supply terminal which is connected to the power substrate 21 by wire bonding and to which a current is supplied. At the other end of the conductive plate 28, a welding portion 28b is exposed from the insulating resin and a capacitor 33 that absorbs motor current ripples is welded to the welding portion 28b so that the former and the latter are electrically connected to each other. By disposing the capacitor 33 at this position, a distance between the capacitor 33 and the power substrate 21 is shortened. It thus becomes possible to effectively absorb ripple components of a motor current flowing into the power substrate 21.

Also, the circuit case 26 is provided with a pad (not shown) to be exposed from the insulating resin as one end of the conductive plate 30 to serve as a signal terminal connected to the power substrate 21 by wire bonding and through which signals from and to the control substrate 23 are inputted and outputted. At the other end of the conductive plate 30, a soldering portion 30a is exposed from the insulating resin and this soldering portion 30a is inserted into a through-hole of the control substrate 23 and soldered together, so that the wiring pattern on the power substrate 21 and the wiring pattern on the control substrate 23 are electrically connected to each other. Hence, the semiconductor switching element 22 and the shunt resistor (not shown) on the power substrate 21 and the electronic circuits on the control substrate 23 are electrically connected to each other.

Further, in the circuit case 26, a connector is provided integrally. The connector is formed of a power connector 31 electrically connected to the battery (not shown) of a vehicle, a signal connector portion (not shown) through which signals from and to the vehicle side are inputted and outputted via an outside wire, and a torque sensor connector portion (not shown) through which signals from and to a torque sensor (not shown) are inputted and outputted via an outside wire. In this connector portion, a connector housing is integrally molded from the insulating resin of the circuit case 26 and a terminal body is also insert-molded.
For example, in the power connector 31, a connector housing 31a is integrally molded from the insulating resin of the circuit case 26. Also, one end of the insert-molded conductive plate 29 is exposed from the insulating resin as a connector terminal 29a, which is the terminal body.

In addition, a welding portion 29b is exposed from the insulating resin at the other end of the conductive plate 29. To this welding portion 29b, one end of the coil 32 that prevents an electromagnetic noise generated during a switching operation of the semiconductor switching element 22 from flowing to the outside is electrically connected by welding.

The heat sink 34 is disposed on the anti-output side of the rotor 4 in the electric motor 1. The power substrate 21 is disposed in close contact with the heat sink 34 on the anti-electric motor 1 side.
The circuit case 26 incorporating the coil 32 and the capacitor 33 is fixed to the heat sink 34 on the control substrate 23 side.
The capacitor 33 is disposed between the circuit case 26 and the heat sink 34, so that heat generated from the capacitor 33 is released to the heat sink 34. A temperature rise of the capacitor 33 is therefore suppressed and the reliability of the capacitor 33 is enhanced.

The cover 35 is molded from insulating resin and closes the opening of the circuit case 26 on the anti-electric motor 1 side. The cover 35 is provided with an abutting portion 35a and it is configured in such a manner that the abutting portion 35a abuts on the anti-electric motor side end 27c of the output terminal 27b or the former and the latter have a slight clearance and the former is allowed to abut on the latter by elasticity of the cover 35.
Accordingly, in the axial direction of the motor terminal 11 from the electric motor 1 side to the cover 35 side, the guide portion 37, the bending portion 27e, the pressure contact portion 36, the anti-electric motor side end 27c, and the abutting portion 35a are disposed sequentially in this order.
Hence, as will be described below, when the motor terminal 11 is press-fit to the protrusion 27f of the slit 27d by pressing with a jig 44 from the outside of the abutting portion 35a of the cover 35, a press-fitting force is transmitted to the cover 35, the abutting portion 35a, the anti-electric motor side end 27c, and the protrusion 27f, which is the pressure contact portion 36, sequentially in this order. Because the bending portion 27e is disposed on the side closer to the electric motor 1 than the pressure contact portion 36, the bending portion 27e does not undergo deformation because of a press-fitting force.
When press-fit, the motor terminal 11 receives a press-fitting force from the output terminal 27b. However, the press-fitting force transmitted to the motor terminal 11 is received by the holder 39 on the electric motor 1 side. The guide portion 37 is disposed between the pressure contact portion 36 and the holder 39. The intermediate portion of the motor terminal 11 is therefore held by the guide portion 37. Buckling of the motor terminal 11 caused by the press-fitting force can be therefore prevented.

The pressure contact portion 36 of the motor terminal 11 and the output terminal 27b is disposed in a space portion 38. The space portion 38 is defined by the heat sink 34, the circuit case 26 including the guide portion 37, and the cover 35 as a closed space (enclosed region).
When the motor terminal 11 is press-fit to the protrusion 27f of the slit 27d, tin plating on the surface of the motor terminal 11 and copper as a material of the output terminal 27b are scraped off and scraped pieces are generated. However, because the pressure contact portion 36 as the press-fit portion is disposed within the space portion 38, which is the closed space, even when scraped pieces are generated, it is possible to prevent scraped pieces from entering inside the electric motor 1 or the control device 20.

Further, the electric motor 1 is isolated from a space in which to accommodate respective components of the control device 20 by the heat sink 34 and the circuit case 26. Hence, even in a case where any of the components of the control device 20 and solder balls falls off, the fallen component does not enter inside the electric motor 1 and an inconvenience, such as locking of rotations of the electric motor 1, does not occur. In addition, a magnetic member does not adhere to the permanent magnet 6 for sensor by attraction.

An assembling procedure of the electric driving apparatus configured as above will now be described sequentially using Fig. 1 through Fig. 3.
Initially, the electric motor 1 is assembled. The permanent magnet 3 is fixedly bonded to the output shaft 2 and the permanent magnet 6 for sensor magnetized to two poles is fixedly bonded to the shaft end 10 of the output shaft 2 on the anti-output side. Thereafter, in reference to the magnetized position of the permanent magnet 6 for sensor, the permanent magnet 3 is magnetized to eight poles by a magnetizer followed by press-fitting of the inner ring of the bearing 41. The rotor 4 is thus formed.

Subsequently, a total of 12 windings, four for each of the U, V, and W phases, are formed in the 12 salient poles 7 of the stator 5 via the insulator 8 by winding around the respective armature windings 9 of the U, V, and W phases after the positions thereof are moved by an electric angle of 120 degrees. The armature winding 9 of the U phase is formed by connecting the heads as well as the ends of the respective windings of the U phase together. The armature windings 9 of the V phase and the W phase are formed in the same manner. The ends of the armature windings 9 of the U, V, and W phases are connected together and this connection is defined as a neutral point. The heads of the armature windings 9 of the phases U, V, and W are respectively connected to the motor terminals 11.
Thereafter, the stator 5 is press-fit to the motor case 18.
Subsequently, after the outer ring of the bearing 40 is fixed to the bracket 13, the output shaft 2 of the rotor 4 is press-fit to the inner ring of the bearing 40. Thereafter, the coupling 17 is press-fit to the output shaft 2. The assembling of the motor portion thus ends.

Subsequently, the assembling of the control device 20 will be described.
Initially, high-current components, such as the semiconductor switching element 22 and the shunt resistor (not shown), are joined onto the power substrate 21 by soldering. The power substrate 21 is then fixedly bonded to the heat sink 34 with a highly heat-conducting adhesive.
Subsequently, after cream solder is applied to the respective electrodes of the control substrate 23 on the cover 35 side, the micro computer 24 and low-current components, such as peripheral circuit elements thereof, are mounted thereon. The respective components are then soldered by melting the cream solder using a reflow device.
Subsequently, after cream solder is applied to the respective electrodes of the control substrate 23 on the circuit case 26 side, the magnetic sensor 25 and low-current components forming the control circuit are mounted thereon. The respective components are then soldered by melting the cream solder using a reflow device.

Subsequently, the terminal of the capacitor 33 is welded to the welding portion 28b exposed from the insulating resin of the circuit case 26. One terminal of the coil 32 is welded to the welding portion 29b exposed from the insulating resin and the other terminal of the coil 32 is welded to the welding portion (not shown) exposed from the insulating resin.
Thereafter, the circuit case 26 to which are welded the capacitor 33 and the coil 32 is installed to the heat sink 34.

Subsequently, the top surface (source) of the semiconductor switching element 22, which is a bare chip, is electrically connected to the pattern on the power substrate 21 by wire bonding. Further, the pattern on the power substrate 21 is electrically connected to the pads 27a and 28a exposed from the insulating resin of the circuit case 26 and a pad (not shown) as the signal terminal by wire bonding.
Subsequently, the soldering portion 30a exposed from the insulating resin of the circuit case 26, the terminal of the signal connector portion (not shown), and the terminal of the torque sensor connector portion (not shown) are inserted into the through-hole of the control substrate 23 and soldered together. In this manner, the wiring pattern on the power substrate 21 and the wiring pattern on the control substrate 23 are electrically connected to each other.
Thereafter, the cover 35 is fixedly bonded to the circuit case 26 with an adhesive.

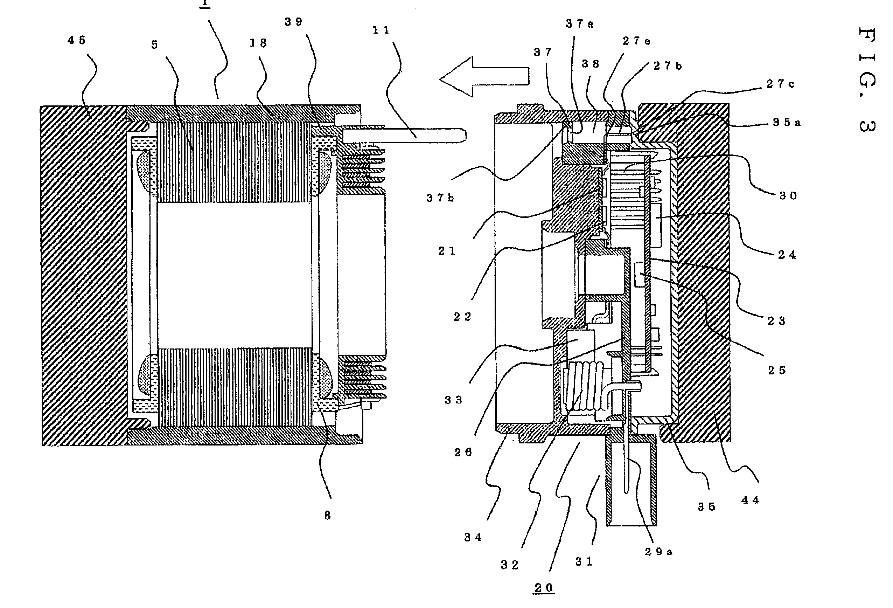

Subsequently, the stator side of the electric motor 1 and the control device 20, which have been assembled separately, are assembled together (see Fig. 3).
Initially, the motor case 18 to which is press-fit the stator 5 is set to the jig 45.
Subsequently, the cover 35 of the control device 20 is set to the jig 44.
The output terminal 27b is press-fit to the motor terminal 11 via the abutting portion 35a of the cover 35 by pressing the jig 44 with a pressing machine in the direction indicated by the arrow.
In this instance, the motor terminal 11 is inserted into the slit 37a of the guide portion 37 and the motor terminal 11 is press-fit to the output terminal 27b. Also, the press-fitting force is measured by a load cell (load measuring instrument) to determine whether the press-fitting is performed normally. Thereafter, the motor case 18 and the control device 20 are fixed to each other with screws (not shown).
Finally, the motor case 18 to which is installed the control device 20 is attached to the bracket 13 while the rotor 4 attached to the bracket 13 is inserted inside the stator 5. The motor case 18 and the bracket 13 are then fixed to each other with screws (not shown). The assembling of the electric driving apparatus is thus completed.

As has been described above, according to the electric driving apparatus of the first embodiment, the control device 20 is disposed on the axis line of the rotation shaft of the electric motor 1 and the electric driving apparatus includes the motor terminal 11 whose end extends from the electric motor 1 toward the control device 20 and the output terminal 27b whose end extends from the control device 20 toward the opposite side of the electric motor 1, that is, in the same direction as the motor terminal 11. The motor terminal 11 and the output terminal 27b are formed in such a manner that the respective ends extend parallel to the axial direction of the electric motor 1 and the motor terminals 11 and the output terminal 27b are electrically connected to each other by the pressure contact portion 36 by which the both terminals are pressure contacted to each other.
Hence, the radial dimension of the electric motor 1 becomes shorter and a size reduction of the apparatus is achieved.
In addition, the pressure contact portion 36 by which to pressure contact the motor terminal 11 and the output terminal 27b is formed at the same time when the control device 20 is installed to the motor case 18 of the electric motor 1. Hence, the assembling performance of the apparatus is enhanced.
It is configured in such a manner that the extension direction of the motor terminal 11 and the output terminal 27b and the assembling direction of the electric motor 1 and the control device 20 are parallel to each other. Hence, the assembling performance is enhanced.
The motor terminal 11 and the output terminal 27b are joined by pressure contact. Hence, the reliability of the electric connection of the apparatus is enhanced. Also, because the need for tightening components, such as screws, is eliminated, the cost of the apparatus is reduced.

The output terminal 27b is provided with the slit 27d and the pressure contact portion 36 is formed in the slit 27d. Hence, a spring mechanism is formed at the pressure contact portion 36.
Accordingly, a stable pressing pressure is applied to the pressure contact portion 36 due to a spring force of the spring mechanism. Hence, the reliability of electric connection of the apparatus is enhanced.

The slit 27d is provided with the protrusion 27f and the protrusion 27f and the motor terminal 11 are pressure contacted to each other. Hence, a pressing pressure of the pressure contact portion 36 is increased and the reliability of electric connection of the apparatus is enhanced.

The anti-electric motor side end 27c of the slit 27d, which opposes the abutting portion 35a of the cover 35, is formed in a closed shape. Hence, even when the motor terminal 11 is press-fit to the protrusion 27f of the slit 27d, the anti-electric motor side end 27c is not expanded and the pressing pressure of the pressure contact portion 36 is not lowered. Hence, the reliability of electric connection of the apparatus is enhanced.
When the motor terminal 11 is press-fit to the protrusion 27f, the abutting portion 35a of the cover 35 is pressed against the anti-electric motor side end 27c. However, because the anti-electric motor side end 27c of the slit 27d is formed in a closed shape, the pressure contact portion 36 does not undergo deformation. Hence, a drop of the pressing pressure of the pressure contact portion 36 can be prevented and the reliability of the electric connection of the apparatus is enhanced.

The output terminal 27b is bent in an L-shape at the region including the slit 27d. Hence, a portion between the pressure contact portion 36 and the region protruding from the insulating resin of the circuit case 26 is an elastic body.
Hence, stress at the joined portion caused by a difference of the linear expansion coefficients among the respective components is mitigated under temperature environment in which the apparatus is used and resistance of the pressure contact portion 36 against a temperature change is increased. The reliability of the electric connection of the apparatus is thus enhanced.

The protrusion 27f is provided to the slit 27d extending toward the anti-electric motor side end 27c of the output terminal 27b. Accordingly, when the motor terminal 11 is press-fit to the protrusion 27f of the slit 27d by pressing with the jig 44 from the outside of the abutting portion 35a of the cover 35, the cover 35, the abutting portion 35a, the anti-electric motor side end 27c, and the protrusion 27f, which is the pressure contact portion 36, are lined up on a straight line in the press-fitting direction.
Hence, the output terminal 27b including the pressure contact portion 36 does not undergo deformation because of buckling caused by a press-fitting force. The reliability of electric connection of the apparatus is thus enhanced.

Because the motor terminal 11 and the output terminal 27b are made of copper or copper alloy and the surface of the motor terminal 11, which is one end, is tin-plated, a compound layer of copper and tin is formed in the pressure contact portion 36.
Hence, in the pressure contact portion 36, layers of copper or copper alloy of the motor terminal 11, a copper tin compound of the motor terminal 11, tin plating, a copper and tin compound of the output terminal 27b, and copper or copper alloy of the output terminal 27b are formed integrally into one piece. The electric resistance of electric connection therefore becomes smaller and the performance of the apparatus is enhanced.

The circuit case 26 of the control device 20 includes the guide portion 37 in which to insert the motor terminal 11 and the pressure contact portion 36 is formed on the anti-electric motor 1 side of the guide portion 37. Hence, when the long motor terminal 11 is press-fit to the protrusion 27f of the slit 27d, the intermediate portion of the motor terminal 11 is held by the guide portion 37.
Hence, buckling of the motor terminal 11 caused by a press-fitting force can be prevented and the reliability of electric connection of the apparatus is enhanced.

The pressure contact portion 36 is disposed in the closed space portion 38 defined by the heat sink 34, the circuit case 26 including the guide portion 37, and the cover 35 of the control device 20. Hence, scraped pieces generated when the motor terminal 11 is press-fit to the protrusion 27f of the slit 27d can be trapped inside the space portion 38.
It thus becomes possible to prevent the occurrence of an electric short and a mechanical locking caused by scraped pieces entering inside the electric motor 1 or the control device 20. The reliability of the apparatus is thus enhanced.

The control device 20 includes the cover 35 that covers the opening of the circuit case 26 on the anti-electric motor 1 side and it is configured in such a manner that the cover 35 is allowed to abut on the output terminal 27b. Hence, the motor terminal 11 can be press-fit to the protrusion 27f of the slit 27d by pressing with the jig 44 from the outside of the abutting portion 35a of the cover 35.
Accordingly, because the pressure contact portion 36 by which to pressure contact the motor terminal 11 and the output terminal 27b is formed at the same time when the preliminarily assembled control device 20 is installed to the motor case 18 of the electric motor 1, the assembling performance of the apparatus is enhanced.
Also, by installing the load cell to the jig 44, a press-fitting force with which to press-fit the motor terminal 11 to the protrusion 27f of the slit 27d can be measured, which makes it possible to estimate whether the pressing pressure of the pressure contact portion 36 is adequate on the basis of the press-fitting force.
Hence, because the pressing pressure of the pressure contact portion 36 can be measured, the reliability of electric connection of the apparatus is enhanced.

The output terminal 27b is formed in such a manner that the anti-electric motor side end 27c is allowed to abut on the cover 35. Hence, when the motor terminal 11 is press-fit to the protrusion 27f of the slit 27d by pressing with the jig 44 from the outside of the abutting portion 35a of the cover 35, the cover 35, the abutting portion 35a, the anti-electric motor side end 27c, and the protrusion 27f, which is the pressure contact portion 36, are lined up on a straight line in the press-fitting direction.
Hence, the press-fitting force of the jig 44 is transmitted to the output terminal 27b in a stable manner and the output terminal 27b including the pressure contact portion 36 does not undergo deformation due to buckling caused by a press-fitting force. The reliability of electric connection of the apparatus is thus enhanced.

The output terminal 27b is formed in such a manner that the anti-electric motor side end 27c becomes flat. Hence, when the motor terminal 11 is press-fit to the protrusion 27f of the slit 27d by pressing with the jig 44 from the outside of the abutting portion 35a of the cover 35, the press-fitting force of the jig 44 is transmitted to the output terminal 27b in a stable manner.
Hence, the output terminal 27b including the pressure contact portion 36 does not undergo deformation due to buckling caused by a press-fitting force. The reliability of electric connection of the apparatus is thus enhanced.
The output terminal 27b is formed in such a manner that the anti-electric motor side end 27c becomes flat and the abutting portion 35a of the cover 35 is also formed flat. Hence, when the motor terminal 11 is press-fit to the protrusion 27f of the slit 27d by pressing with the jig 44 from the outside of the abutting portion 35a of the cover 35, the press-fitting force of the jig 44 is transmitted to the output terminal 27b in a stable manner.
Hence, the output terminal 27b including the pressure contact portion 36 does not undergo deformation due to buckling caused by a pressing force. The reliability of electric connection of the apparatus is thus enhanced.
In addition, the anti-electric motor side end 27c of the output terminal 27b and the abutting portion 35a of the cover 35 come into contact with each other in a larger area. It thus becomes possible to prevent damage on the cover 35 made of insulating resin at the time of press-fitting.

In the first embodiment described above, the surface of the motor terminal 11 is tin-plated and the conductive plates 27, 28, and 30 are formed by pressing plates stripe-plated with nickel and tin. It should be appreciated, however, that the surface of the motor terminal 11 may have no plating and the conductive plates 27, 28, and 30 maybe plated after non-plated plates are formed by pressing. In this case, there is no plating on the surface of the pressure contact portion 36 on the motor terminal 11 side whereas the surface thereof on the protrusion 27f side is tin-plated.
Alternatively, the surface of the motor terminal 11 may be tin-plated and the conductive plates 27, 28, and 30 may be plated after non-plated plates are formed by pressing. In this case, the surfaces of the pressure contact portion 36 on both the motor terminal 11 side and the protrusion 27f side are tin-plated.
Further, a magneto-resistive element is used as the magnetic sensor 25. However, the magnetic sensor 25 is not limited to a magneto-resistive element and other magnetic detection elements, such as a hall IC, may be used as well.

### Second Embodiment

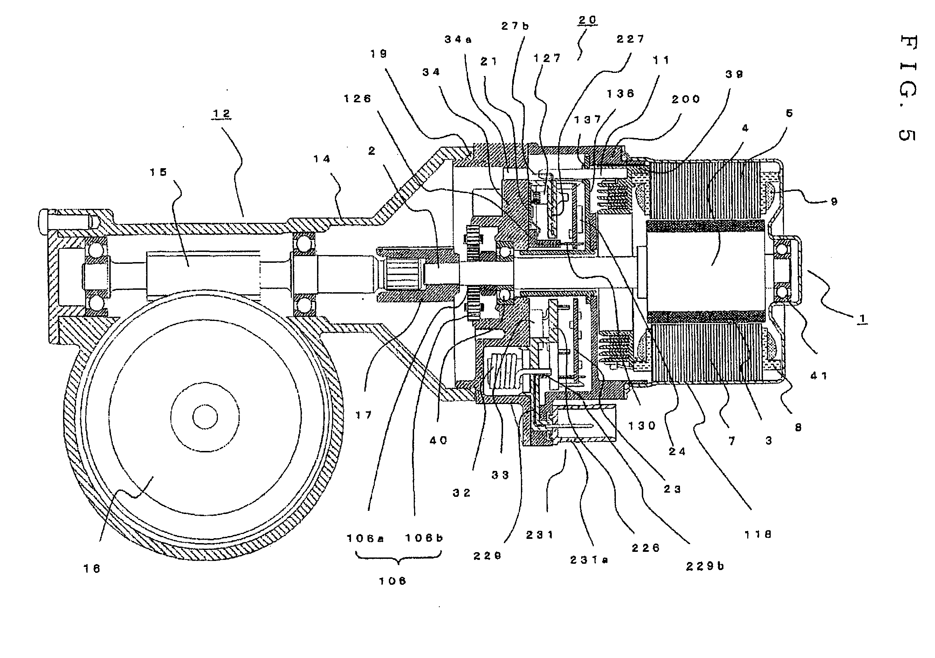

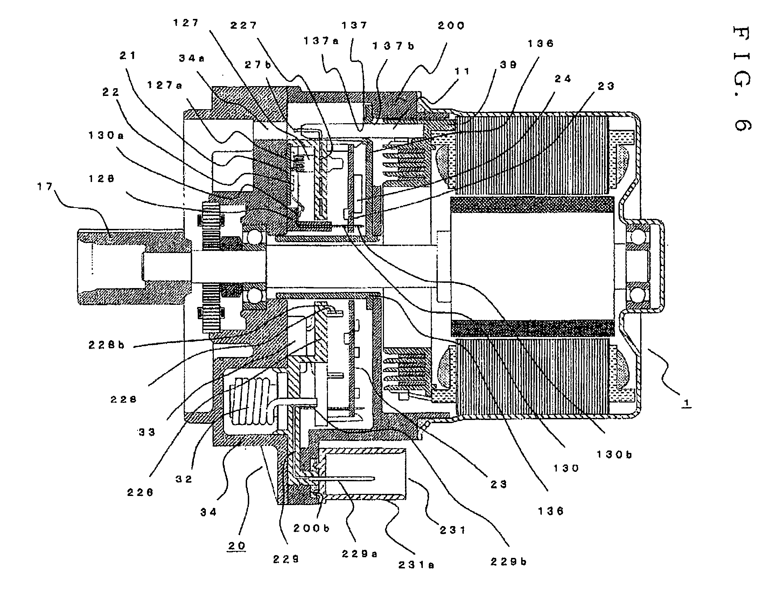

Fig. 5 is a cross section of an electric power steering machine to which an electric driving apparatus according to a second embodiment of the invention is attached. Fig. 6 is a cross section of the electric driving apparatus according to the second embodiment of the invention.
In the second embodiment, the control device 20 is disposed on the output shaft 2 side of the electric motor 1.
Referring to the drawings, a rotation position sensor 106 of the electric motor 1 is a resolver and includes a resolver rotor 106a and a resolver stator 106b.
The outer diameter of the resolver rotor 106a shapes a special curve such that a permeance of the radial clearance between the resolver stator 106b and the resolver rotor 106a varies sinusoidally in angle.
An exciting coil and two sets of output coils are wound around the resolver stator 106b and a variance of the radial clearance between the resolver rotor 106a and the resolver stator 106b is detected to output a 2-phase output voltage varying as sine and cosine.
As with the first embodiment above, each motor terminal 11 is made of copper or copper alloy and the surface thereof is tin-plated. The stator 5 is press-fit to a yoke 118 made of iron.

The control device 20 includes a power substrate 21, a control substrate 23, a coil 32, a capacitor 33 (about 2200 µF × 3), a terminal table 126 in which a plurality of conductive plates 127 and 130 are insert-molded in insulating resin, a circuit case 226 in which a plurality of conductive plates 227, 228, and 229 are insert-molded in insulating resin, a heat sink 34, a control substrate 23, and a housing 200 made of aluminum and installed so as to cover the circuit case 226.
The yoke 118 to which is press-fit the stator 5 is fixed to the housing 200 with screws (not shown).
The heat sink 34 of the control device 20 is fixed to a gear case 14 of a reduction gear 12.

The control substrate 23 is formed of a multi-layer (for example 4-layer) glass epoxy substrate and a micro computer 24 and peripheral circuit elements (low-current components) including a drive circuit (not shown) and a motor current detection circuit (not shown) are mounted on the control substrate 23 by soldering.
The micro computer 24 computes an assistive torque on the basis of a current detection circuit (not shown) to detect a motor current flowing into the electric motor 1 via one end of a shunt resistor (not shown) and a steering torque signal from a torque sensor (not shown) and also computes a current corresponding to the assistive torque by feeding back the motor current and the rotation position of the rotor 4 detected by the rotation position sensor 106.
The micro computer 24 is configured to output a drive signal that controls a semiconductor switching element 22 of a bridge circuit.
Although it is not shown in the drawings, the micro computer 24 is furnished with a know self-diagnosis function in addition to an A-to-D converter and a PWM timer circuit, so that it always performs a self-diagnosis on whether the system is operating normally to interrupt a motor current upon occurrence of an abnormality.

In the terminal table 126, a conductive plate 127 electrically connected to the conductive plate of the circuit case 226 and a conductive plate 130 electrically connected to the control substrate 23 are insert-molded in insulating resin. At one ends of the conductive plates 127 and 130, pads 127a and 130a used for connection with the power substrate 21 by wire bonding are formed to be exposed from the insulating resin.
In the circuit case 226, a plurality of conductive plates 227, 228, and 229 insert-molded in the insulating resin form the wiring pattern. The conductive plates 227, 228, and 229 are formed by pressing copper or copper alloy plates preliminarily reflow-plated with tin.
In the circuit case 226, one end of the conductive plate 227 is formed to be exposed from the insulating resin and electrically connected to the conductive plate 127 of the terminal table 126 by resistance welding.
Hence, the conductive plate 227 is electrically connected to the power substrate 21 by way of the conductive plate 127 and an aluminum wire for wire bonding.
At the other end of the conductive plate 227, an output terminal 27b is formed. The output terminal 27b is formed in such a manner that the end thereof extends in a direction opposite to the electric motor 1 and also extends parallel to the axial direction of the electric motor 1.
The output terminal 27b is the same as the one in the first embodiment above and a detailed shape is shown in Fig. 4A through Fig. 4C.
Hence, the surface of the pressure contact portion 36 on the motor terminal 11 side is tin-plated whereas there is no adhesion of tin plating on the surface thereof on the protrusion 27f side because it is pressed after plating.
Herein, the surface of the motor terminal 11 is tin-plated and the conductive plates 227, 228, and 229 are formed by pressing plates reflow-plated with tin. It should be appreciated, however, that there may be no plating on the surface of the motor terminal 11 and the conductive plates 227, 228, and 229 may be plated after non-plated plates are formed by pressing. In this case, there is no plating on the surface of the pressure contact portion 36 on the motor terminal 11 side whereas the surface thereof on the protrusion 27f side is tin-plated.
Alternatively, the surface of the motor terminal 11 may be tin-plated and the conductive plates 227, 228, and 229 may be plated after non-plated plates are formed by pressing. In this case, the surfaces of the pressure contact portion 36 on both the motor terminal 11 side and the protrusion 27f side are tin-plated.

Although it is not shown in the drawings, the circuit case 226 is formed in such a manner that one end of the conductive plate 228 is exposed from the insulating resin and electrically connected to the conductive plate 127 of the terminal table 126 by resistance welding.
Hence, the conductive plate 228 is electrically connected to the power substrate 21 by way of the conductive plate 127 and an aluminum wire for wire bonding. As is shown in Fig. 6, at the other end of the conductive plate 228, a welding portion 228b is exposed from the insulating resin and the capacitor 33 that absorbs motor current ripples is electrically connected to the welding portion 228b by welding.

The terminal table 126 is provided with a pad 130a formed to be exposed from the insulating resin as one end of the conductive plate 130 and to serve as a signal terminal connected to the power substrate 21 by wire bonding and through which signals from and to the control substrate 23 are inputted and outputted. At the other end of the conductive plate 130, a soldering portion 130b is exposed from the insulating resin and this soldering portion 130b is inserted into a through-hole of the control substrate 23 and soldered together. Hence, the wiring pattern on the power substrate 21 and the wiring pattern on the control substrate 23 are electrically connected to each other.
Consequently, the semiconductor switching element 22 and the shunt resistor (not shown) on the power substrate 21 are electrically connected to electronic circuits on the control substrate 23.

A connector is installed to the housing 200. This connector is formed of a power connector 231 electrically connected to the battery (not shown) of a vehicle, a signal connector portion (not shown) through which signals from and to the vehicle side are inputted and outputted via an outside wiring, and a torque sensor connector portion (not shown) through which signals from and to a torque sensor (not shown) are inputted and outputted via an outside wiring.
In these connectors, a connector housing is formed integrally from insulating resin and a terminal body is insert-molded in the insulating resin of the circuit case 226. The terminal body is inserted into the connector housing and forms the connector.
For example, in the power connector 231, a connector housing 231a is molded integrally with the signal connector portion (not shown) and the torque sensor connector portion (not shown) from insulating resin. One end of the conductive plate 229 insert-molded in the circuit case 226 is exposed from the insulating resin as the connector terminal 229a, which is the terminal body.

At the other end of the conductive plate 229, a welding portion 229b is exposed from the insulating resin of the circuit case 226 and one end of the coil 32 that prevents an electromagnetic noise generated during a switching operation of the semiconductor switching element 22 from flowing to the outside is welded to this welding portion 229b.

The heat sink 34 is disposed on the output terminal 2 side of the electric motor 1. The heat sink 34 is provided with a hole 34a communicating with a gear case 14, which is the outer portion of the control device 20, so as to oppose the end of the motor terminal 11. Although the hole 34a communicates with the interior of the gear case 14, because the gear case 14 and the heat sink 34 are sealed with a rubber ring 19, water, dust, and the like are prevented from entering inside the control device 20.
The power substrate 21 is disposed in close contact with the heat sink 34 on the electric motor 1 side and the terminal table 126 is fixed to the peripheral portions of the power substrate 21 of the heat sink 34. Further, the circuit case 226 on which are mounted the coil 32 and the capacitor 33 is fixed to the heat sink 34 on the control substrate 23 side.
The coil 32 and the capacitor 33 are inserted into holes (the hole for the capacitor 33 is not shown) provided to the heat sink 34 and heat generated from the coil 32 and the capacitor 33 is released to the heat sink 34.
Hence, a temperature rise at the coil 32 and the capacitor 33 is suppressed and the reliability of the coil 32 and the capacitor 33 is enhanced. In this case, clearances between the holes in the heat sink 34 (the hole for the capacitor 33 is not shown) and the coil 32 and the capacitor 33 are filled with a highly heat-conducting adhesive or grease to promote heat releasing of the coil 32 and the capacitor 33.
Because the heat sink 34 is installed to the gear case 14, after heat generated from the semiconductor switching element 22, the coil 32, and the capacitor 33 is released to the heat sink 34, the heat is further released to the gear case 14. The heat releasing performance of the control device 20 is thus enhanced.

A holder 136 is made of insulating resin and, together with the housing 200, isolates a space in which to accommodate respective components of the control device 20 from the electric motor 1. When the control device 20 and the electric motor 1 are isolated in this manner, even when any of the respective components of the control device 20 and solder balls falls off, the fallen component does not enter inside the electric motor 1 and an inconvenience, such as locking of rotations of the electric motor 1, does not occur.
A guide portion 137 is formed integrally with the holder 136 from insulating resin. The guide portion 137 is provided with a slit 137a penetrating in a direction parallel to the axis line of the electric motor 1 and the motor terminal 11 is held by the slit 137a. A chamfer 137b is provided to the slit 137a on the electric motor 1 side to facilitate insertion of the motor terminal 11.
As is shown in Fig. 4A through Fig. 4C, a pressure contact portion 36 of the output terminal 27b is provided to the guide portion 137 on the anti-electric motor 1 side. When the long motor terminal 11 is press-fit to the protrusion 27f of the slit 27d, the intermediate portion of the motor terminal 11 is held by the guide portion 137. Hence, buckling of the motor terminal 11 caused by a press-fitting force can be prevented.

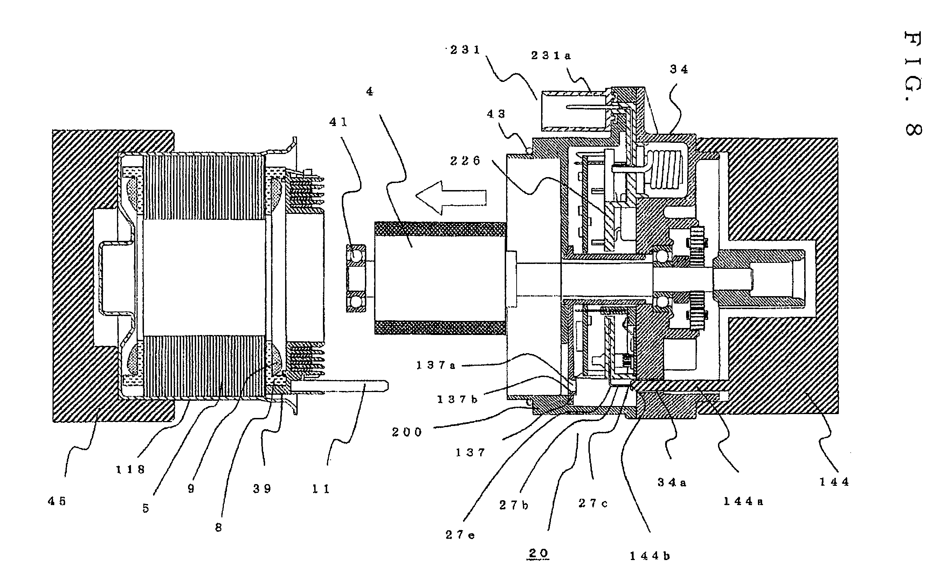

Referring to Fig. 8, the output terminal 27b is press-fit to the motor terminal 11 using a jig 144. The jig 144 is provided with a salient 144a to be inserted into the hole 34a of the heat sink 34. When the control device 20 is set to the jig 144, an abutting portion 144b, which is the tip end of the salient 144a, abuts on the anti-electric motor side end 27c of the output terminal 27b. In this instance, the guide portion 137, the bending portion 27e, the pressure contact portion 36, the anti-electric motor side end 27c, and the abutting portion 144b are disposed sequentially in this order from the electric motor 1 side to the jig 144 side in the axial direction of the motor terminal 11.
Hence, when the protrusion 27f of the slit 27d is press-fit to the motor terminal 11 by pressing with the jig 144, a press-fitting force is transmitted sequentially to the abutting portion 144b, the anti-electric motor side end 27c, and the protrusion 27f, which is the pressure contact portion 36. Because the bending portion 27e is disposed on the side closer to the electric motor 1 than the pressure contact portion 36, the bending portion 27e does not undergo deformation because of a press-fitting force.
When press-fit, the motor terminal 11 receives a press-fitting force from the output terminal 27b and the press-fitting force transmitted to the motor terminal 11 is received by a holder 39 on the electric motor 1 side. The guide portion 137 is disposed between the pressure contact portion 36 and the holder 39.
Hence, the intermediate portion of the motor terminal 11 is held by the guide portion 137 and buckling of the motor terminal 11 caused by a press-fitting force can be prevented.

The assembling procedure of the electric driving apparatus configured as above will now be described.
Initially, the electric motor 1 is assembled. After the permanent magnet 3 is fixedly bonded to the output shaft 2, it is magnetized to eight poles by a magnetizer followed by press-fitting of the inner ring of the bearing 41. The rotor 4 is thus formed.
Subsequently, in the same manner as in the first embodiment above, after armature windings 9 of the U, V, and W phases are formed in the stator 5, the respective armature windings 9 of U, V, and W phases are connected. The respective heads of the armature windings 9 of the U, V, and W phases are connected to the motor terminals 11. Thereafter, the stator 5 is press-fit to the yoke 118.

The assembling of the control device 20 will now be described.

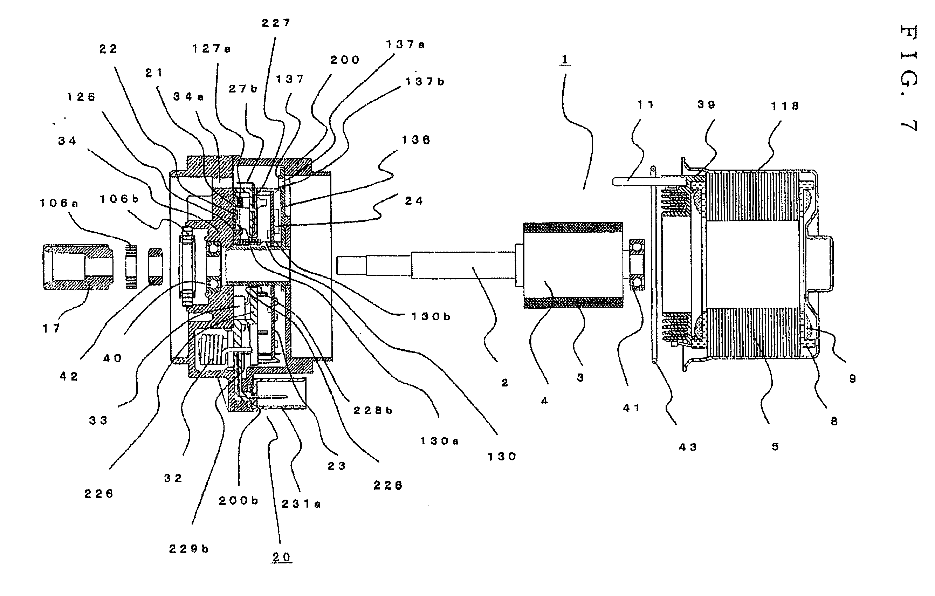

Fig. 7 is an exploded view of the electric driving apparatus according to the second embodiment of the invention.
Initially, high-current components, such as the semiconductor switching element 22 and the shunt resistor (not shown), are joined onto the power substrate 21 by soldering.
Subsequently, after cream solder is applied to the respective electrodes of the control substrate 23 on the electric motor 1 side, the micro computer 24 and low-current components, such as the peripheral circuit elements thereof, are mounted thereon and these components are soldered by melting the cream solder using a reflow device.
Thereafter, after cream solder is applied on the respective electrodes of the control substrate 23 on the circuit case 226 side, low-current components forming the control circuit are mounted thereon and the respective components are soldered by melting the cream solder using a reflow device.

Subsequently, the outer ring of a bearing 40 is fixed to the heat sink 34.
The power substrate 21 is then fixedly bonded to the heat sink 34 with a highly heat-conducting adhesive. At the same time, the terminal table 126 is fixedly bonded to the heat sink 34 with an adhesive.
Thereafter, the top surface (source) of the semiconductor switching element 22, which is a bare chip, and the pattern on the power substrate 21 are electrically connected to each other by wire bonding. Further, the pattern on the power substrate 21 is electrically connected to the pads 127a and 130a exposed from the insulating resin of the terminal table 126 by wire bonding.

Subsequently, the terminal of the capacitor 33 is welded to the welding portion 228b exposed from the insulating resin of the circuit case 226.
Then, one end of the coil 32 is welded to the welding portion 229b exposed from the insulating resin and the other end of the coil 32 is welded to the welding portion (not shown) exposed from the insulating resin.
Thereafter, the resolver stator 106b is fixed to the heat sink 34 with screws (not shown).
Subsequently, the circuit case 226 to which are welded the capacitor 33 and the coil 32 is fixed to the heat sink 34 with screws (not shown).

Subsequently, the solder portion 130b of the conductive plate 130 exposed from the insulating resin of the terminal table 126, the terminal of the signal connector portion (not shown), and the terminal of the torque sensor connector portion (not shown) are inserted into the through-hole of the control substrate 23 and soldered together. In this manner, the wiring pattern on the power substrate 21 and the wiring pattern on the control substrate 23 are electrically connected to each other.

Subsequently, the holder 136 is fixed to the housing 200 with screws (not shown).
Thereafter, a liquid gasket is applied on the matching surface of the heat sink 34 and the housing 200 and the housing 200 is fixed to the heat sink 34 with screws (not shown). An adhesive is applied to a groove 200b of the housing 200 and the connector housing having the integrally-molded connector housing 231a is fixed to the housing 200 with screws (not shown).

Subsequently, the output shaft 2 of the rotor 4 is press-fit to the inner ring of the bearing 40 installed to the heat sink 34. Thereafter, a spacer 42 is inserted into the output shaft 2 and the resolver rotor 106a is press-fit to the output shaft 2. Further, a coupling 17 is press-fit to the output shaft 2.

Subsequently, the stator 5 side of the electric motor 1 and the control device 20 incorporating the rotor 4 side of the electric motor 1, which have been assembled separately, are assembled together (see Fig. 8).
Initially, the yoke 118 to which is press-fit the stator 5 is set to a jig 45.
Subsequently, a rubber ring 43 is attached to the outer peripheral end of the housing 200 and the heat sink 34 of the control device 20 is set to the jig 144. The output terminal 27b is press-fit to the motor terminal 11 by pressing the jig 144 with a pressing machine in the direction indicated by the arrow so that the salient 144a of the jig 144 is pressed against the output terminal 27b.
In this instance, the motor terminal 11 is inserted into the slit 137a of the guide portion 137 and the motor terminal 11 is press-fit to the output terminal 27b. Also, a press-fitting force is measured by a load cell to determine whether the press-fitting is performed normally.
Subsequently, the yoke 118 is fixed to the housing 200 with screws (not shown). The assembling of the electric driving apparatus is thus completed.
Incidentally, after the assembling of the electric driving apparatus is completed, a current is forcedly flown to the motor terminal 11 from the output terminal 27b, so that a voltage drop caused by energization can be measured by inserting a voltage measuring probe through the hole 34a of the heat sink 34 . It thus becomes possible to determine whether the electric resistance of the pressure contact portion 36 is normal.

As has been described, according to the electric driving apparatus of the second embodiment, the control device 20 is disposed on the axis line of the rotation shaft of the electric motor 1. The apparatus includes the motor terminal 11 having an end extending from the electric motor 1 toward the control device 20 and the output terminal 27b having an end extending from the control device 20 toward the opposite side to the electric motor 1. The motor terminal 11 and the output terminal 27b are formed in such a manner that the ends thereof extend parallel to the axial direction of the electric motor 1 and that the motor terminal 11 and the output terminal 27b are electrically connected to each other at the pressure contact portion 36 by which the both terminals are pressure contacted to each other.
Hence, the radial dimension of the electric motor 1 becomes shorter and a size reduction of the apparatus is achieved.
Also, because the pressure contact portion 36 by which to pressure contact the motor terminal 11 and the output terminal 27b is formed at the same time when the control device 20 incorporating the rotor 4 side of the electric motor 1 is installed to the electric motor 1 incorporating the stator 5 side, the assembling performance of the apparatus is enhanced.
Because it is configured in such a manner that the extension direction of the motor terminal 11 and the output terminal 27b is parallel to the assembling direction of the electric motor 1 and the control device 20, the assembling performance of the apparatus is enhanced.
Also, because the motor terminal 11 and the output terminal 27b are joined by pressure contact, the reliability of electric connection of the apparatus is enhanced.
Because the need for tightening components, such as screws, is eliminated, the cost of the apparatus is reduced.

Also, because the output terminal 27b is provided with the slit 27d and the pressure contact portion 36 is formed in the slit 27d, a spring mechanism is formed in the pressure contact portion 36.
Hence, a stable pressing pressure is applied to the pressure contact portion 36 by a spring force of the spring mechanism and the reliability of electric connection of the apparatus is enhanced.

The slit 27d is provided with the protrusion 27f and because the protrusion 27f and the motor terminal 11 are pressure contacted to each other, the pressing pressure of the pressure contact portion 36 is increased. The reliability of electric connection of the apparatus is thus enhanced.

Because the anti-electric motor side end 27c of the slit 27d is formed in a closed shape, even when the motor terminal 11 is press-fit to the protrusion 27f of the slit 27d, the anti-electric motor side end 27c is not expanded and the pressing pressure of the pressure contact portion 36 is not lowered. The reliability of electric connection of the apparatus is thus enhanced.
Also, when the motor terminal 11 is press-fit to the protrusion 27f, the abutting portion 144b of the jib 144 is pressed against the anti-electric motor side end 27c. However, because the anti-electric motor side end 27c of the slit 27d is formed in a closed shape, the pressure contact portion 36 does not undergo deformation. A drop of pressing pressure of the pressure contact portion 36 can be therefore prevented and the reliability of electric connection of the apparatus is enhanced.

The output terminal 27b is bent in an L-shape at the region including the slit 27d. Hence, a portion between the pressure contact portion 36 and the region protruding from the insulating resin of the circuit case 226 is an elastic body.
Accordingly, stress of the joined portion caused by a difference of linear expansion coefficients among the respective portions is mitigated under temperature environment in which the apparatus is used, and resistance of the pressure contact portion 36 against a temperature change is increased. The reliability of electric connection of the apparatus is thus enhanced.

The protrusion 27f is provided to the slit 27d extending toward the anti-electric motor side end 27c of the output terminal 27b. Hence, when the protrusion 27f of the slit 27d is press-fit to the motor terminal 11 by pressing with the salient 144a of the jig 144, the salient 144a, the abutting portion 144b, the anti-electric motor side end 27c, and the protrusion 27f, which is the pressure contact portion 36, are lined up on a straight line in the press-fit direction.
Hence, the output terminal 27b including the pressure contact portion 36 does not undergo deformation due to buckling caused by a press-fitting force. The reliability of electrical connection of the apparatus is thus enhanced.

The motor terminal 11 and the output terminal 27b are made of copper or copper alloy and the surface of the motor terminal 11, which is one end, is tin-plated. Accordingly, a compound layer of copper and tin is formed in the pressure contact portion 36.
Hence, in the pressure contact portion 36, layers of copper or copper alloy of the motor terminal 11, the copper tin compound of the motor terminal 11, tin plating, the copper tin compound of the output terminal 27b, and copper or copper alloy of the output terminal 27b are formed integrally into one piece. Hence, the electric resistance of electric connection becomes smaller and the performance of the apparatus is enhanced.

The holder 136 of the control device 20 includes the guide portion 137 in which to insert the motor terminal 11 and the pressure contact portion 36 is provided to the guide portion 137 on the anti-electric motor 1 side. Hence, when the long motor terminal 11 is press-fit to the protrusion 27f of the slit 27d, the intermediate portion of the motor terminal 11 is held by the guide portion 137.
Accordingly, buckling of the motor terminal 11 caused by a press-fitting force can be prevented and the reliability of electric connection of the apparatus is enhanced.

The heat sink 34 of the control device 20 is provided with the hole 34a penetrating through the gear case 14, which is the outer portion of the control device 20, so as to oppose the anti-electric motor side end 27c of the output terminal 27b. When the salient 144a of the jig 144 is inserted into the hole 34a, the abutting portion 144b, which is the tip end of the salient 144a, abuts on the anti-electric motor side end 27c of the output terminal 27b.
Hence, the motor terminal 11 can be press-fit to the protrusion 27f of the slit 27d by pressing the anti-electric motor side end 27c of the output terminal 27b with the jig 144. The assembling performance of the apparatus is thus enhanced.

Also, because the pressure contact portion 36 by which to pressure contact the motor terminal 11 and the output terminal 27b is formed at the same time when the stator 5 side of the electric motor 1 and the control device 20 incorporating the rotor 4 side of the electric motor 1, which have been assembled separately, are assembled together, the assembling performance of the apparatus is enhanced.

Also, by installing the load cell to the jig 144, the press-fitting force with which to press-fit the motor terminal 11 to the protrusion 27f of the slit 27d can be measured, which makes it possible to estimate whether a pressing pressure of the pressure contact portion 36 is adequate on the basis of the press-fitting force. Hence, the pressing pressure of the pressure contact portion 36 can be measured and the reliability of electric connection of the apparatus is enhanced.

The output terminal 27b is formed in such a manner that the anti-electric motor side end 27c is allowed to abut on the abutting portion 144b of the salient 144a. Hence, when the motor terminal 11 is press-fit to the protrusion 27f of the slit 27d by pressing with the jig 144, the salient 144a, the abutting portion 144b, the anti-electric motor side end 27c, and the protrusion 27f, which is the pressure contact portion 36, are lined up on a straight line in the press-fit direction.
The press-fitting force of the jig 144 is therefore transmitted to the output terminal 27b in a stable manner and the output terminal 27b including the pressure contact portion 36 does not undergo deformation due to buckling caused by a press-fitting force. The reliability of electric connection of the apparatus is thus enhanced.

Because the output terminal 27b is formed in such a manner that the anti-electric motor side end 27c becomes flat, when the motor terminal 11 is press-fit to the protrusion 27f of the slit 27d by pressing with the salient 144a of the jig 144, the press-fitting force of the jig 144 is transmitted to the output terminal 27b in a stable manner.
Hence, the output terminal 27b including the pressure contact portion 36 does not undergo deformation due to buckling caused by a press-fit force and the reliability of electric connection of the apparatus is enhanced.

Although the hole 34a of the heat sink 34 communicates with the interior of the gear case 14, because the gear case 14 and the heat sink 34 are sealed with the rubber ring 19, water, dust, and the like are prevented from entering inside the control device 20.

The coil 32 and the capacitor 33 are disposed as they are inserted into the holes (the hole for capacitor 33 is not shown) provided to the heat sink 34 and heat generated from the coil 32 and the capacitor 33 is therefore released to the heat sink 34. The heat releasing performance of the apparatus is thus enhanced.

The power substrate 21 on which are mounted heat generating components, such as the semiconductor switching element 22, is fixedly bonded to the heat sink 34 with a highly heat-conducting adhesive and the coil 32 and the capacitor 33 are inserted in the holes (the hole for the capacitor 33 is not shown) provided to the heat sink 34. Further, the heat sink 34 is installed to the gear case 14.
Hence, heat generated from the semiconductor switching element 21, the coil 32, and the capacitor 33 is released to the gear case 14 by way of the heat sink 34. The heat releasing performance of the apparatus is thus enhanced.

By inserting a voltage measuring probe through the hole 34a of the heat sink 34 and forcedly flowing a current to the motor terminal 11 from the output terminal 27b, a voltage drop caused by energization can be measured.
Hence, whether electrical resistance of the pressure contact portion 36 is normal can be confirmed after the assembling is completed. The reliability of electric connection of the apparatus is thus enhanced.

In this embodiment described above, the number of the poles of the permanent magnet 3 is set to eight and the number of salient poles of the stator 5 is set to 12. It should be appreciated, however, that the numbers are not limited to this combination and other numbers of poles and salient poles may be combined as well.
The electric motor 1 is not limited to a brushless motor, either, and it may be an induction motor or a switched reluctance motor (SR motor).
The armature windings 9 of the electric motor 1 are star connected. However, they may be delta connected instead.
The power substrate 21 is a ceramic substrate of alumina. However, it may be a ceramic substrate of aluminum nitride or silicon nitride.

The power substrate 21 is formed by mounting the semiconductor switching element 22 on the wiring pattern of the ceramic substrate by soldering. However, it may be a power module of a transfer mold type formed by mounting the semiconductor switching element 22 on a metal plate serving also as a power terminal and a heat-releasing plate, for example, a copper plate, by soldering followed by coating with mold resin.

Wire bonding is used to connect the power substrate 21 and the pads. However, ribbon bonding by a ribbon made of thin aluminum may be used as well.

Various modifications and alterations of this invention will be apparent to those skilled in the art without departing from the scope this invention as defined by the appended claims, and it should be understood that this is not limited to the illustrative embodiments set forth herein.

In particular, the features of all dependent claims can be combined with each other as long as they do not contradict each other.

## Claims

1. An electric driving apparatus, comprising:
an electric motor (1);
a control device (20) that is disposed on an axis line of a rotation shaft (4) of the electric motor (1) and controls the electric motor (1);
a motor terminal (11) that extends parallel to an axial direction of the rotation shaft (4) from the electric motor (1) toward the control device (20); and
a control device output terminal (27b) that is provided on an extension line of the motor terminal (11) and is bent in an L-shape at a region (27e) including a slit portion connected to the motor terminal (11),
wherein the slit portion (27d) is provided with a pressure contact portion (36) that is formed of a protrusion (27f) provided to the slit portion (27d) extending toward the end (27c) and the motor terminal (11) is pressure contacted by the protrusion (27f),
wherein the motor terminal (11) is press-fit to the control device output terminal (27b) in a process of combining the control device (20) and the electric motor (1) so as to electrically connect the both terminals (11) (27b) by bringing the both terminals into a pressure contact state.

2. The electric driving apparatus according to claim 1, wherein:
the slit portion (27d) is formed in a shape having an end in which the electric motor is inserted and a closed anti-electric motor side end (27c) on an opposite side.

3. The electric driving apparatus according to claim 1, wherein:
the motor terminal (11) and the output terminal (27b) are made of one of copper and copper alloy and at least one of the terminals is tin-plated and a compound layer of copper and tin is formed in the pressure contact portion (36).

4. The electric driving apparatus according to claim 1, wherein:
the control device (20) has a guide portion (37) in which to insert the motor terminal (11) and the pressure contact portion (36) is formed on a tip-end side of the motor terminal (11) having passed by the guide portion (37).

5. The electric driving apparatus according to claim 1, wherein:
the pressure contact portion (36) is disposed within a closed space portion (38) formed in the control device (20).

6. The electric driving apparatus according to claim 1, wherein:
the control device (20) has a cover (35) that covers an opening on the anti-electric motor side and the cover (35) is allowed to abut on the output terminal (27b).

7. The electric driving apparatus according to claim 6, wherein:
the output terminal (27b) is formed in such a manner that the anti-electric motor side end (27c) is allowed to abut on the cover (35).

8. The electric driving apparatus according to claim 1, wherein:
the control device (20) has a hole (34a) communicating with an outside and the hole (34a) is provided so as to oppose the anti-electric motor side end.

9. The electric driving apparatus according to claim 1, wherein:
the output terminal (27b) is formed in such a manner that the anti-electric motor side (27c) becomes flat.

10. The electric driving apparatus according to claim 1, wherein:
the electric driving apparatus is an electric power steering machine.

## Patentansprüche

1. Elektrische Antriebsvorrichtung, aufweisend:
einen elektrischen Motor (1);
eine Steuereinrichtung (20), die an einer Achsenlinie einer Rotationswelle (4) des elektrischen Motors (1) angeordnet ist und den elektrischen Motor (1) steuert;
einen Motoranschluss (11), der sich parallel zu einer Axialrichtung der Rotationswelle (4) von dem elektrischen Motor (1) in Richtung der Steuereinrichtung (20) erstreckt; und
einen Steuereinrichtungsausgangsanschluss (27b), der an einer Verlängerungslinie des Motoranschlusses (11) vorgesehen ist und in einer L-Form an einem Bereich (27e) aufweisend einen geschlitzten Abschnitt, der mit dem Motoranschluss (11) verbunden ist, gebogen ist,
wobei der geschlitzte Abschnitt (27d) mit einem Druckkontaktabschnitt (36) versehen ist, der aus einem Vorsprung (27f) ausgebildet ist, der an dem geschlitzten Abschnitt (27d) vorgesehen ist, der sich in Richtung des Endes (27c) erstreckt und der Motoranschluss (11) durch Druck von dem Vorsprung (27f) kontaktiert wird,
wobei der Motoranschluss (11) an dem Steuereinrichtungsausgangsanschluss (27b) bei einem Prozess des Kombinierens der Steuereinrichtung (20) und des elektrischen Motors (1) pressgepasst wird, um elektrisch die beiden Anschlüsse (11, 27b) zu verbinden, indem die beiden Anschlüsse in einen Druckkontaktzustand gebracht werden.

2. Elektrische Antriebsvorrichtung nach Anspruch 1, bei der
der geschlitzte Abschnitt (27d) in einer Form ausgebildet ist, die ein Ende, in welches der elektrische Motor eingeführt wird, und ein verschlossenes antielektrisches Motorseitenende (27c) an einer gegenüberliegenden Seite aufweist.

3. Elektrische Antriebsvorrichtung nach Anspruch 1, bei der
der Motoranschluss (11) und der Ausgangsanschluss (27b) aus einem aus Kupfer und Kupferlegierung hergestellt sind und zumindest einer der Anschlüsse mit Zinn beschichtet ist und eine Verbindungsschicht aus Kupfer und Zinn in dem Druckkontaktabschnitt (36) ausgebildet ist.

4. Elektrische Antriebsvorrichtung nach Anspruch 1, bei der
die Steuereinrichtung (20) einen Führungsabschnitt (37), in welchen der Motoranschluss (11) eingeführt wird, aufweist und der Druckkontaktabschnitt (36) an einer Seite der Spitze des Motoranschlusses (11), die den Führungsabschnitt (37) passiert hat, ausgebildet ist.

5. Elektrische Antriebsvorrichtung nach Anspruch 1, bei der
der der Druckkontaktabschnitt (36) innerhalb eines Abschnitts (38) eines geschlossenen Raums, der in der Steuereinrichtung (20) ausgebildet ist, angeordnet ist.

6. Elektrische Antriebsvorrichtung nach Anspruch 1, bei der
die Steuereinrichtung (20) eine Abdeckung (35) aufweist, die eine Öffnung an der anti-elektrischen Motorseite abdeckt und es der Abdeckung (35) gestattet ist an den Ausgangsanschluss (27b) anzugrenzen.

7. Elektrische Antriebsvorrichtung nach Anspruch 6, bei der
der Ausgangsanschluss (27b) auf eine solche Weise ausgebildet ist, dass es dem anti-elektrischen Motorseitenende (27c) gestattet ist an die Abdeckung (35) anzugrenzen.

8. Elektrische Antriebsvorrichtung nach Anspruch 1, bei der
die Steuereinrichtung (20) ein Loch (34a) aufweist, das mit einer Außenseite in Verbindung steht und bei der das Loch (34a) vorgesehen ist, um dem anti-elektrischen Motorseitenende gegenüber zu liegen.

9. Elektrische Antriebsvorrichtung nach Anspruch 1, bei der
der Ausgangsanschluss (27b) auf eine solche Weise ausgebildet ist, dass die anti-elektrische Motorseite (27c) flach wird.

10. Elektrische Antriebsvorrichtung nach Anspruch 1, bei der
die elektrische Antriebsvorrichtung eine elektrische Lenkhilfemaschine ist.

## Revendications

1. Appareil d'entraînement électrique, comprenant :
un moteur électrique (1) ;
un dispositif de commande (20) qui est disposé sur une ligne d'axe d'un arbre de rotation (4) du moteur électrique (1) et commande le moteur électrique (1) ;
une borne de moteur (11) qui s'étend parallèle à une direction axiale de l'arbre de rotation (4) à partir du moteur électrique (1) vers le dispositif de commande (20) ; et
une borne de sortie du dispositif de commande (27b) qui est agencé sur une ligne d'extension de la borne de moteur (11) et est courbé en une forme de L au niveau d'une région (27e) comprenant une portion de fente raccordée à la borne de moteur (11),
dans lequel la portion de fente (27d) est dotée d'une portion de contact de pression (36) qui est formée d'une protubérance (27f) agencée dans la portion de fente (27d) s'étendant vers l'extrémité (27c) et la borne de moteur (11) vient en contact par pression avec la protubérance (27f),
dans lequel la borne de moteur (11) est ajustée avec serrage à la borne de sortie de dispositif de commande (27b) dans un processus de combinaison du dispositif de commande (20) et du moteur électrique (1) de façon à connecter électriquement les deux bornes (11) (27b) en amenant les deux bornes dans un état de contact par pression.

2. Appareil d'entraînement électrique selon la revendication 1, dans lequel :
la portion de fente (27d) est formée en une forme ayant une extrémité dans laquelle le moteur électrique est inséré et une extrémité fermée côté moteur anti-électrique (27c) sur un côté opposé.

3. Appareil d'entraînement électrique selon la revendication 1, dans lequel :
la borne de moteur (11) et la borne de sortie (27b) sont constituées de l'un du cuivre et d'un alliage de cuivre et au moins une des bornes est étamée et une couche de composé de cuivre et d'étain est formée dans la portion de contact par pression (36).

4. Appareil d'entraînement électrique selon la revendication 1, dans lequel :
le dispositif de commande (20) a une portion de guidage (37) dans laquelle la borne de moteur doit être insérée (11) et la portion de contact par pression (36) est formée sur un côté d'extrémité de pointe de la borne de moteur (11) qui est passée par la portion de guidage (37).

5. Appareil d'entraînement électrique selon la revendication 1, dans lequel :
la portion de contact par pression (36) est disposée à l'intérieur d'une portion d'espace fermée (38) formée dans le dispositif de commande (20).

6. Appareil d'entraînement électrique selon la revendication 1, dans lequel :
le dispositif de commande (20) a un couvercle (35) qui couvre une ouverture sur le côté moteur anti-électrique et le couvercle (35) peut buter sur la borne de sortie (27b).

7. Appareil d'entraînement électrique selon la revendication 6, dans lequel :
la borne de sortie (27b) est formée de telle sorte que l'extrémité côté moteur anti-électrique (27c) peut buter contre le couvercle (35).

8. Appareil d'entraînement électrique selon la revendication 1, dans lequel :
le dispositif de commande (20) a un trou (34a) communiquant avec un extérieur et le trou (34a) est agencé de façon à s'opposer à l'extrémité côté moteur anti-électrique.

9. Appareil d'entraînement électrique selon la revendication 1, dans lequel :
la borne de sortie (27b) est formée de telle sorte que le côté moteur anti-électrique (27c) devient plat.

10. Appareil d'entraînement électrique selon la revendication 1, dans lequel :
l'appareil d'entraînement électrique est une machine de direction assistée électrique.
